# EUROPÄISCHE PATENTSCHRIFT

(11) **EP 2 196 828 B1**
(45) Veröffentlichungstag und Bekanntmachung des Hinweises auf die Patenterteilung: **04.10.2017**
(21) Anmeldenummer: 09178134.4
(22) Anmeldetag: 07.12.2009
(51) Int. Cl.: G01V 3/08, G01V 3/15

(54) **Ortungsgerät**
Location device
Appareil de localisation

(30) Priorität: 10.12.2008 DE 102008054445
(43) Veröffentlichungstag der Anmeldung: 16.06.2010
(73) Patentinhaber: Robert Bosch GmbH, 70442 Stuttgart (DE)
(72) Erfinder: Krapf, Reiner, 72770 Reutlingen (DE); Haase, Bjoern, 70184 Stuttgart (DE); Renz, Kai, 70771 Leinfelden-Echterdingen (DE)

(56) Entgegenhaltungen:
- WO-A1-03/073130
- DE-A1- 3 600 446
- US-A- 5 917 314
- US-A1- 2005 194 959

## Beschreibung

### Stand der Technik

Die Erfindung geht aus von einem Ortungsgerät nach dem Oberbegriff des Anspruchs 1.

Es ist bereits ein handgeführtes Ortungsgerät mit einer Ortungseinheit, die zu einer Erfassung eines Vorhandenseins eines in einem Untersuchungsobjekt angeordneten Gegenstands mittels eines Untersuchungssignals vorgesehen ist, bekannt.

Aus der US 2005/0194959 A1 ist ein Stud-Senor zur Ortung von hinter einer Wand befindlichen Gegenständen bekannt, der eine Mehrzahl von Messelektroden in einer symmetrischen Anordnung aufweist. Zur genaueren Ortung eines verborgenen Gegenstandes nutzt die Vorrichtung der US 2005/0194959 A1 ein Verfahren, bei dem das Verhältnis von Kapazitätsmessungen an unterschiedlichen Elektrodenkonfigurationen benutzt wird. In einer speziellen Ausführungsform besitzt die Vorrichtung der US 2005/0194959 A1 eine matrixartige Sensoranordnung in Reigen und Spalten.

Aus der US 5, 917, 314 ist ein Stud-Senor bekannt, der insbesondere zur genauen Bestimmung der Kantenlage eines Holzbalkens drei kapazitive Elektroden besitzt. Beim Verfahren der Vorrichtung der US 5, 917, 314 über eine Wand wird die zeitliche Entwicklung der an den drei Elektroden gemessenen Kapazitäten bestimmt und über eine ermittelt.

Aus der WO 03/073130 A1 ist ein Verfahren zur Ortung von in einem Medium eingeschlossenen Objekten bekannt, bei welchem mittels zumindest einer kapazitiven Sensorvorrichtung ein Detektionssignal erzeugt wird, welches in das zu untersuchende Medium eingreift, so dass durch Auswertung des Detektionssignals, insbesondere durch eine Impedanzmessung, Informationen über in dem Medium eingeschlossene Objekte gewonnen werden. Die kapazitive Sensorvorrichtung der WO 03/073130 A1 besteht im Wesentlichen aus einem Messkondensator, der zwei Kondensatorelektroden aufweist.

### Vorteile der Erfindung

Es wird ein Ortungsgerät, insbesondere ein handgeführtes Ortungsgerät, vorgeschlagen, mit einer Ortungseinheit, die zu einer Erfassung eines Vorhandenseins eines in einem Untersuchungsobjekt angeordneten Gegenstands mittels eines Untersuchungssignals vorgesehen ist, wobei die Ortungseinheit eine Elektrodeneinheit mit zumindest zwei Paaren von Sensorelektroden, die als Messelektroden ausgebildet sind, aufweist, die dazu vorgesehen sind, zwei unterschiedliche Sensorsignale zu liefern, und mit zumindest einer Sensorelektrode, die als Signalerzeugungselektrode ausgebildet ist, wobei die Sensorelektroden kreuzförmig angeordnet sind. In diesem Zusammenhang soll unter "vorgesehen" insbesondere speziell ausgestattet und/oder speziell ausgelegt und/oder speziell programmiert verstanden werden. Vorzugsweise sind beide Sensorelektroden zu einem Messen eines Untersuchungssignals vorgesehen, wobei das Untersuchungssignal von einem Gleichsignal oder besonders vorteilhaft von einem Wechselsignal gebildet sein kann. Des Weiteren kann es vorteilhaft sein, wenn das Ortungsgerät von einem kapazitiven Ortungsgerät mit Sensorelektroden, die insbesondere zu einer kapazitiven Erfassung des Untersuchungssignals vorgesehen sind, gebildet ist, wobei hierbei ein Gegenstand durch Änderung eines Dielektrikums bzw. einer Dielektrizitätskonstante erfasst werden kann. Vorteilhafterweise kann die Sensorelektrode sowohl als Messelektrode, die zu einem Messen eines Untersuchungssignals bzw. eines Messsignals vorgesehen ist, als auch als Signalerzeugungselektrode, die zu einer Erzeugung des Untersuchungssignals bzw. des Messsignals vorgesehen ist, ausgebildet sein. Eine Ausbildung der Sensorelektrode als Messelektrode oder als Signalerzeugungselektrode hängt dabei von einer Anordnung bzw. einer Verschaltung der Sensorelektrode innerhalb einer Schaltungsanordnung ab. Prinzipiell ist es zudem denkbar, dass die Elektrodeneinheit nur als Messelektroden ausgebildete Sensorelektroden aufweist und eine Gegenelektrode hierbei von dem Untersuchungsobjekt, wie beispielsweise der Wand, gebildet ist. Durch die erfindungsgemäße Ausgestaltung kann vorteilhaft eine zuverlässige, insbesondere redundante Signalerfassung bzw. -detektion erreicht werden. Zudem kann durch einen Vergleich der beiden gemessenen Signale eine selbsttätige Kalibrierung der Ortungseinheit, wie beispielsweise mittels einer Auswerteeinheit, erreicht werden und eine zeitaufwendige Kalibrierung des Ortungsgeräts durch einen Bediener kann unterbleiben. Es kann ferner besonders vorteilhaft ein Messfeld, insbesondere ein Wechselfeld, für alle als Messelektroden ausgebildeten Sensorelektroden mit einer im Wesentlichen gleich großen Feldstärke eines Messsignals bzw. eines Messfelds erzeugt werden und so ein einfaches Erfassen von Gegenstandssignalen in dem Untersuchungsobjekt, wie beispielsweise Leitungen und/oder Balken in einer Wand, von der Ortungseinheit mittels der Elektrodeneinheit erreicht werden. Zudem können Inhomogenitäten und/oder Untergrundsignale in dem Untersuchungsobjekt erkannt und insbesondere durch eine nachgeschaltete Auswerteelektronik und/oder Signalverarbeitung, insbesondere mittels Softwareprogrammen, herausgefiltert werden. Vorzugsweise ist hierzu die als Signalerzeugungselektrode ausgebildete Sensorelektrode symmetrisch bezüglich der verschiedenen als Messelektroden ausgebildeten Sensorelektroden und/oder der beiden Symmetrieachsen angeordnet.

Weiterhin wird vorgeschlagen, dass die Elektrodeneinheit zumindest eine erste Symmetrieachse aufweist, wobei die zwei als Messelektroden ausgebildeten Sensorelektroden eines Paares bezüglich der ersten Symmetrieachse im Wesentlichen symmetrisch angeordnet sind. In diesem Zusammenhang soll unter "symmetrisch angeordnet" insbesondere verstanden werden, dass eine Ausrichtung und/oder eine Form und/oder eine Geometrie und/oder ein Detektionsvermögen und/oder weitere, dem Fachmann als sinnvoll erscheinende Eigenschaften der beiden Sensorelektroden symmetrisch bezüglich der ersten Symmetrieachse angeordnet sind. Unter "im Wesentlichen symmetrisch" soll hierbei insbesondere eine geringfügige Abweichung von einer symmetrischen Anordnung verstanden werden, wobei die geringfügige Abweichung maximal 30 %, vorteilhafterweise maximal 20 % und besonders bevorzugt maximal 5 % einer Symmetriekenngröße, wie insbesondere einer Elektrodenfläche und/oder eines Elektrodenabstands und/oder eines Winkels und/oder einer Länge und/oder einer Ausdehnung und/oder einer Form und/oder einer Ausrichtung und/oder weiterer, dem Fachmann als sinnvoll erscheinender Symmetriekenngrößen, beträgt. Es kann hierdurch vorteilhaft ein Einfluss einer Inhomogenität des Untersuchungsobjekts, wie insbesondere einer Wand, während einer Messung reduziert werden. Des Weiteren kann durch einen Vergleich der beiden Sensorsignale der beiden Sensorelektroden eine vorteilhafte Unterscheidung zwischen einem Gegenstandssignal und einem Untergrundsignal und/oder einem unerwünschten Störsignal erreicht werden. Besonders vorteilhaft kann dies erreicht werden, wenn die Elektrodeneinheit zumindest eine zweite Symmetrieachse aufweist, wobei die zwei als Messelektroden ausgebildeten Sensorelektroden eines Paares bezüglich der beiden Symmetrieachsen symmetrisch zueinander angeordnet sind. Grundsätzlich ist zudem eine bezüglich der Symmetrieachse unsymmetrische Anordnung der Sensorelektroden denkbar, wobei hier die unsymmetrische Anordnung durch eine Korrektur innerhalb einer Auswerteeinheit berücksichtigt bzw. ausgeglichen werden kann.

Es wird zudem vorgeschlagen, dass eine zweite Symmetrieachse im Wesentlichen senkrecht bezüglich der ersten Symmetrieachse angeordnet ist. In diesem Zusammenhang soll unter "im Wesentlichen senkrecht" insbesondere verstanden werden, dass die zweite Symmetrieachse bezüglich der ersten Symmetrieachse einen Winkel von mindestens 75°, vorzugsweise von mindestens 83° und besonders vorteilhaft von mindestens 88° einschließt. Vorzugsweise sind die beiden Symmetrieachsen in einer Ebene angeordnet, die insbesondere parallel zu einer Oberfläche eines Untersuchungsobjekts, wie beispielsweise einer Wandoberfläche, angeordnet ist. Es kann hierbei eine konstruktiv einfache geometrische Anordnung der zumindest zwei Sensorelektroden vorteilhaft erreicht werden. Grundsätzlich ist es ferner denkbar, dass die beiden Symmetrieachsen um 45° gedreht zueinander angeordnet sind oder eine weitere, dem Fachmann als sinnvoll erscheinende Anordnung der Symmetrieachsen möglich ist. Zudem kann es vorteilhaft sein, wenn die Elektrodeneinheit mehr als zwei Symmetrieachsen aufweist.

In einer weiteren Ausgestaltung der Erfindung wird vorgeschlagen, dass das Ortungsgerät eine Führungseinheit mit einer Verfahrrichtung aufweist, die im Wesentlichen parallel zu einer der beiden Symmetrieachsen ausgerichtet ist. In diesem Zusammenhang soll unter einer "Führungseinheit" insbesondere eine Einheit verstanden werden, die zu einem Führen des Ortungsgeräts auf einer Oberfläche des Untersuchungsobjekts bzw. beabstandet zu der Oberfläche des Untersuchungsobjekts vorgesehen ist. Vorzugsweise erfolgt eine Führung des Ortungsgeräts in einer Ebene parallel zu der Oberfläche des Untersuchungsobjekts. Die Führungseinheit kann zudem Rollkörper zu einem Führen aufweisen. Des Weiteren soll unter einer "Verfahrrichtung" insbesondere eine Richtung verstanden werden, entlang welcher das Ortungsgerät bevorzugt auf oder parallel zu einer Oberfläche des Untersuchungsobjekts bewegt wird, insbesondere von einem Bediener des Ortungsgeräts. Die Verfahrrichtung kann hierbei abhängig von einer Rollrichtung von Rollkörpern der Führungseinheit und/oder von einer bevorzugten, insbesondere einer horizontalen Handbewegungsrichtung sein, die vorzugsweise senkrecht zu einer Schwerkraft und/oder parallel zu einer Bodenfläche ausgerichtet ist. Unter "im Wesentlichen parallel" soll hierbei insbesondere verstanden werden, dass die Symmetrieachse und die Verfahrrichtung einen Winkel von maximal 15°, vorteilhafterweise von maximal 7° und besonders bevorzugt von maximal 2° zueinander bilden. Durch die erfindungsgemäße Ausgestaltung können vorteilhaft Gegenstände, die vorzugsweise vertikal bzw. parallel zur Schwerkraft in dem Untersuchungsobjekt - wie beispielsweise einer Wand - verlaufen, detektiert werden.

Es wird zudem vorgeschlagen, dass die zumindest zwei als Messelektroden ausgebildeten Sensorelektroden eines Paares zueinander beabstandet angeordnet sind, wodurch ein mögliches Störsignal, wie beispielsweise durch ein Verkippen des Ortungsgeräts, besonders schnell anhand der unterschiedlichen Sensorsignale der zumindest zwei Sensorelektroden von einem Objektsignal unterschieden werden kann. Zudem kann hierbei eine Bewegungsinformation und/oder eine Richtungsinformation aufgrund der unterschiedlichen Ortsinformationen in den Sensorsignalen der Sensorelektroden ermittelt werden.

Besonders vorteilhaft ist zumindest eine Sensorelektrode auf einer Symmetrieachse angeordnet, wodurch vorteilhaft eine Signaländerung entlang der Symmetrieachse erreicht und/oder erfasst werden kann.

Weiterhin wird vorgeschlagen, dass zumindest eine der Sensorelektroden von einer Kapazitivelektrode gebildet ist. In diesem Zusammenhang soll unter einer "Kapazitivelektrode" insbesondere eine Elektrode verstanden werden, die zu einer kapazitiven Messung und/oder Erfassung vorgesehen ist. Vorzugsweise kann dadurch eine Änderung einer Materialeigenschaft durch eine Änderung einer Dielektrizitätskonstante, wie beispielsweise durch die Anwesenheit eines Balkens und/oder eines Kabels in einer Wand, ermittelt werden. Bevorzugt wird hierzu ein elektrisches Signal und/oder Feld, insbesondere zwischen zumindest zwei Sensorelektroden, erzeugt, wobei innerhalb eines von dem elektrischen Signal und/oder Feld durchsetzten Bereichs des Untersuchungsobjekts eine Änderung eines Dielektrikums aufgrund einer Änderung einer Struktur des Untersuchungsobjekts erfasst werden kann. In einer weiteren Ausgestaltung der Erfindung ist es zudem denkbar, dass die Sensorelektroden von weiteren, dem Fachmann als sinnvoll erscheinenden Elektroden gebildet sind.

Ferner wird vorgeschlagen, dass die beiden Paare von als Messelektroden ausgebildeten Sensorelektroden gekreuzt zueinander bzw. um 90 ° zueinander gedreht angeordnet sind. Die Elektrodeneinheit weist die beiden Paare von als Messelektroden ausgebildeten zumindest zwei weiteren Sensorelektroden auf, die um ca. 90° versetzt bezüglich der beiden ersten Sensorelektroden angeordnet sind. Es kann hierbei eine effektive Trennung von Störsignalen und Untergrundsignalen von Objektsignalen in den Sensorsignalen aufgrund der speziellen räumlichen Anordnung der Sensorelektroden erreicht werden. Zudem kann ein gegenseitiger Einfluss bzw. eine gegenseitige Beeinträchtigung der Sensorelektroden im Betrieb des Ortungsgeräts minimiert werden, und es kann eine im Wesentlichen gleiche Beeinträchtigung für nahezu alle Sensorelektroden, insbesondere bei mehr als zwei Sensorelektroden, vorteilhaft erreicht werden.

Es können vorteilhaft Objekte in unterschiedlichen Tiefen des Untersuchungsobjekts erfasst werden, wenn die Elektrodeneinheit zumindest zwei weitere Sensorelektroden aufweist, die zusammen mit den ersten zwei Sensorelektroden in Reihe und symmetrisch zu zumindest einer Symmetrieachse angeordnet sind. Vorzugsweise weisen hierbei die beiden Sensorelektrodenpaare jeweils einen unterschiedlichen Elektrodenabstand auf, wobei ein Abstand der Elektroden vorzugsweise einen Radius von Feldlinien bzw. eine Ausbreitung eines Untersuchungssignals und damit insbesondere eine Eindringtiefe des Untersuchungssignals festlegt.

In einer vorteilhaften Weiterbildung der Erfindung wird vorgeschlagen, dass die Ortungseinheit eine Auswerteeinheit aufweist, die dazu vorgesehen ist, Daten der zumindest zwei im Wesentlichen symmetrisch bezüglich zumindest einer der beiden Symmetrieachsen zueinander angeordneten Sensorelektroden zusammen auszuwerten. In diesem Zusammenhang soll unter einer "Auswerteeinheit" insbesondere eine Einheit verstanden werden, die von einer Recheneinheit und/oder einer Kontrolleinheit gebildet sein kann, wobei die Auswerteeinheit sowohl von einem Prozessor allein als auch insbesondere von einem Prozessor und weiteren Elektronikbauteilen, wie beispielsweise einem Speichermittel, gebildet sein kann. Besonders vorteilhaft kann die Auswerteeinheit von einem Mikrokontroller oder einer digitalen Datenauswertung gebildet sein, wobei vorteilhafterweise ein Analog-Digital-Wandler der Auswerteeinheit vorgeschaltet angeordnet ist. Durch die erfindungsgemäße Ausgestaltung kann besonders schnell durch einen Vergleich der zumindest zwei

Sensorsignale ein in dem Untersuchungsobjekt vorhandener Gegenstand anhand der detektierten Signale erfasst werden und eventuelle Störsignale können in den Sensorsignalen von der Auswerteeinheit herausgefiltert werden. Es kann ferner ein insbesondere selbsttätiges Kalibrieren der Ortungseinheit zu Beginn eines Messvorgangs, insbesondere zu Beginn eines Betriebs, und/oder eine Anpassung einer Messempfindlichkeit bzw. einer Messschwelle an aktuelle Wandverhältnisse, wie beispielsweise Inhomogenitäten, mittels eines Auswertens der Sensorsignale durch die Auswerteeinheit erreicht werden.

Es ist zudem denkbar, dass die Auswerteeinheit dazu vorgesehen ist, einen Detektionsradius zumindest eines von einer der Sensorelektroden empfangenen Untersuchungssignals zu variieren. In diesem Zusammenhang soll unter einem "Detektionsradius" insbesondere ein Radius verstanden werden, der von einem Abstand einer ersten Sensorelektrode zu einer weiteren, mit der ersten Sensorelektrode verschalteten Sensorelektrode gebildet ist. Es können hierbei Gegenstände, die mit einer unterschiedlichen Tiefe in dem Untersuchungsobjekt angeordnet sind, vorteilhaft erfasst und lokalisiert werden, und/oder ein Abstand des Gegenstands bezüglich einer Oberfläche des Untersuchungsobjekts kann ermittelt werden. Ferner kann besonders vorteilhaft ein Herausfiltern von insbesondere störenden Oberflächeneffekten erreicht werden.

Ein von der Ortungseinheit erzeugtes Untersuchungssignal bzw. Messsignal kann hierbei vorteilhaft von einem Gleichsignal gebildet sein, wobei unter einem "Gleichsignal" insbesondere ein elektrisches Signal innerhalb eines zumindest teilweise statischen elektrischen Felds verstanden werden soll. Besonders vorteilhaft jedoch ist die Ortungseinheit dazu vorgesehen ist, zumindest ein elektrisches Wechselsignal zu erzeugen. Hierbei soll unter einem "elektrischen Wechselsignal" insbesondere ein Signal und/oder Feld verstanden werden, das seine elektrische Stärke und/oder Polung mit der Zeit ändert. Es kann hierdurch eine besonders exakte und einfache Messung bzw. Erfassung von Messsignalen erreicht werden.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmä-ßigerweise auch einzeln betrachten und zu sinnvollen weiteren Kombinationen zusammenfassen.

Es zeigen:
- Fig. 1: ein Ortungsgerät mit einer Elektrodeneinheit in einer schematischen Ansicht,
- Fig. 2: das Ortungsgerät zusammen mit einem Untersuchungsobjekt in einer schematischen Ansicht,
- Fig. 3: die Elektrodeneinheit mit fünf Sensorelektroden in einer schematischen Ansicht,
- Fig. 4: ein Schaltbild des Ortungsgeräts,
- Fig. 5: einen Signalverlauf der vier Sensorelektroden,
- Fig. 6a - 6g: alternative Ausführungen der Elektrodeneinheit in einer schematischen Ansicht und
- Fig. 7a - 7c: eine Anordnung einer Sensorelektrode mit einem variierenden Detektionsradius in einer schematischen Ansicht.

### Beschreibung der Ausführungsbeispiele

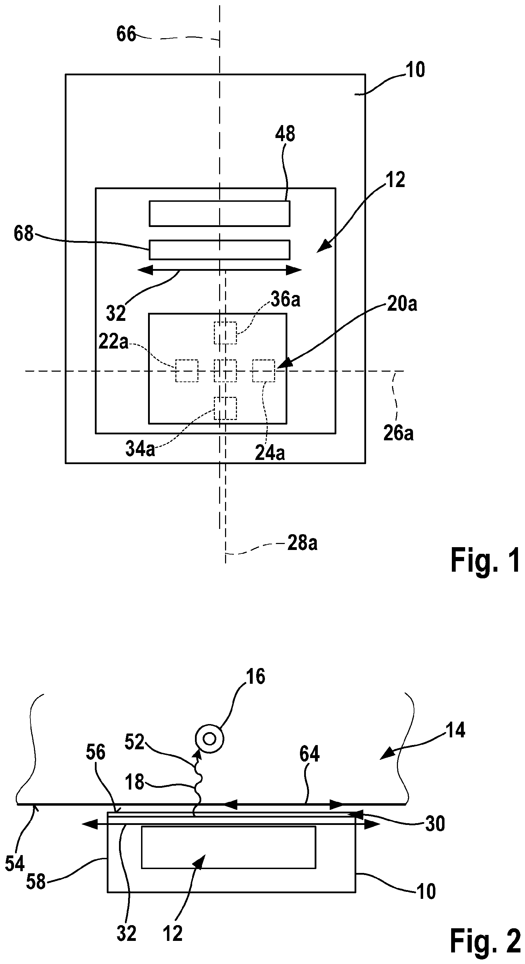

In den Figuren 1 und 2 ist ein handgeführtes Ortungsgerät 10 schematisch dargestellt. Das Ortungsgerät 10 weist eine Ortungseinheit 12 auf, die zu einer Erfassung eines Vorhandenseins eines in einem Untersuchungsobjekt 14, wie beispielsweise einer Wand, angeordneten Gegenstands 16 mittels eines Untersuchungssignals 18 vorgesehen ist. Hierzu weist die Ortungseinheit 12 eine Elektrodeneinheit 20a und eine Auswerteeinheit 48 auf, die zu einem Messen und/oder einem Erzeugen des Untersuchungssignals 18 und einem Auswerten eines gemessenen Signals vorgesehen sind. Des Weiteren weist die Ortungseinheit 12 eine Führungseinheit 30 auf, mittels der das Ortungsgerät 10 von einem Bediener auf einer Oberfläche 54 des Untersuchungsobjekts 14, wie beispielsweise einer Wandoberfläche, und/oder in einem Abstand parallel zu der Oberfläche 54 des Untersuchungsobjekts 14 bewegt werden kann (Figur 2).

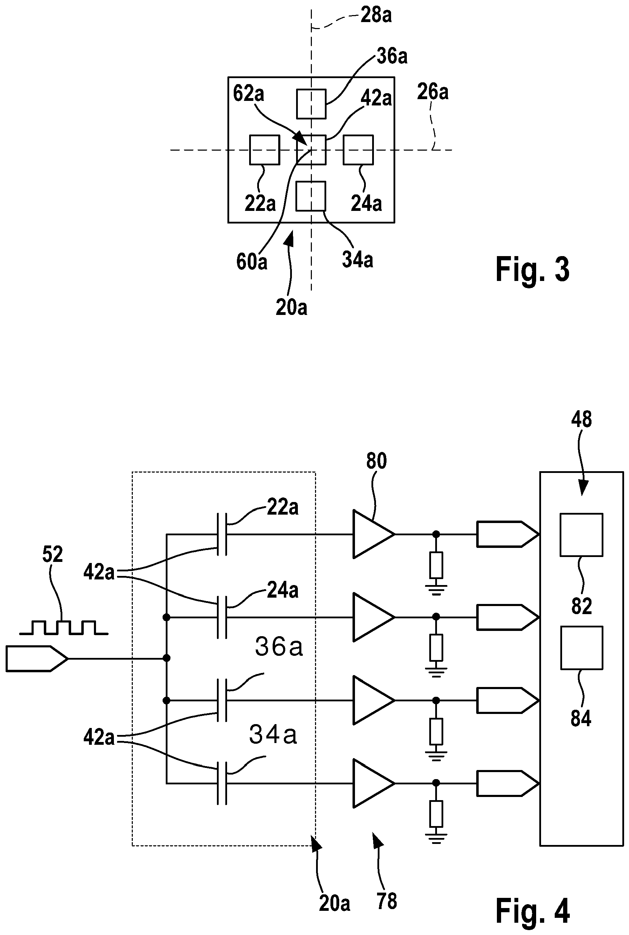

Die Elektrodeneinheit 20a ist in Figur 3 näher dargestellt. Die Elektrodeneinheit 20a weist fünf Sensorelektroden 22a, 24a, 34a, 36a, 42a auf. Vier Sensorelektroden 22a, 24a, 34a, 36a sind jeweils als Messelektrode und eine Sensorelektrode 42 als Signalerzeugungselektrode ausgebildet, wobei eine Ausbildung der Sensorelektroden 22a, 24a, 34a, 36a, 42a als Messelektrode oder Signalerzeugungselektrode von einer Anordnung und/oder Verschaltung der Sensorelektroden 22a, 24a, 34a, 36a, 42a in einem Schaltkreis abhängt. Die vier als Messelektroden ausgebildeten Sensorelektroden 22a, 24a, 34a, 36a sind jeweils von einer Kapazitivelektrode gebildet. Des Weiteren weist die Elektrodeneinheit 20a eine erste Symmetrieachse 26a und eine zweite Symmetrieachse 28a auf. Die beiden Symmetrieachsen 26a, 28a verlaufen in einer Ebene und sind senkrecht zueinander angeordnet. Zudem ist die Ebene, in der die beiden Symmetrieachsen 26a, 28a angeordnet sind, parallel zu einer Oberfläche 56 eines Gehäuses 58 des Ortungsgeräts 10 und damit in einem sachgemäßen Betrieb parallel zu der Oberfläche 54 des Untersuchungsobjekts 14 (Figur 2). Jeweils zwei der vier als Messelektroden ausgebildeten Sensorelektroden 22a, 24a, 34a, 36a bilden ein Paar von Messelektroden. Die zwei als Messelektroden ausgebildeten Sensorelektroden 22a, 24a, 34a, 36a eines Paars sind jeweils symmetrisch bezüglich der ersten und der zweiten Symmetrieachse 26a, 28a angeordnet, wobei die beiden als Messelektroden ausgebildeten Sensorelektroden 22a, 24a, 34a, 36a eines Paars jeweils auf einer der Symmetrieachsen 26a, 28a angeordnet sind. Hierbei sind die ersten zwei als Messelektroden ausgebildeten Sensorelektroden 22a, 24a auf der ersten Symmetrieachse 26a und die weiteren zwei als Messelektroden ausgebildeten Sensorelektroden 34a, 36a auf der zweiten Symmetrieachse 28a angeordnet. Die beiden Paare von als Messelektroden ausgebildeten Sensorelektroden 22a, 24a, 34a, 36a sind somit gekreuzt zueinander bzw. um 90° zueinander gedreht angeordnet. Zudem sind die beiden als Messelektroden ausgebildeten Sensorelektroden 22a, 24a, 34a, 36a eines Paars jeweils beabstandet zueinander angeordnet. In einer von einem Kreuzungspunkt 60a der ersten und der zweiten Symmetrieachsen 26a, 28a gebildeten Mitte 62a ist die als Signalerzeugungselektrode ausgebildete Sensorelektrode 42a angeordnet, so dass diese symmetrisch bezüglich der ersten und der zweiten Symmetrieachse 26a, 28a angeordnet ist. Die als Signalerzeugungselektrode ausgebildete Sensorelektrode 42a ist zudem mit einem gleichen Abstand zu jeder der vier als Messelektroden ausgebildeten Sensorelektroden 22a, 24a, 34a, 36a angeordnet, so dass in einem Betrieb des Ortungsgeräts 10 ein gleiches Signal an jeder der vier als Messelektroden ausgebildeten Sensorelektroden 22a, 24a, 34a, 36a anliegt.

Im Betrieb des Ortungsgeräts 10 wird dieses von einem Bediener über die Oberfläche 54 des von einer Wand gebildeten Untersuchungsobjekts 14 mittels der Führungseinheit 30 geführt. Eine bevorzugte Verfahrrichtung 32 der Führungseinheit 30 ist hierbei parallel zu einer horizontalen Richtung 64 auf der Oberfläche 54 der Wand, um insbesondere vertikal ausgerichtete Gegenstände 16, wie beispielsweise Balken, Leitungen usw., zu erfassen und zu orten (Figur 2). Die Verfahrrichtung 32 ist hierbei im Wesentlichen senkrecht zu einer auf das Ortungsgerät 10 wirkenden Schwerkraft ausgerichtet und im Wesentlichen parallel zur ersten Symmetrieachse 26a. Zudem weist das Ortungsgerät 10 eine Längsachse 66 auf, die im Wesentlichen parallel zu der zweiten Symmetrieachse 28a ausgerichtet ist (Figur 1). In einer alternativen Ausgestaltung der Erfindung ist zudem denkbar, dass die erste und/oder die zweite Symmetrieachse 26a, 28a geneigt gegenüber der Längsachse 66 des Ortungsgeräts 10 ausgerichtet ist, wie beispielsweise um 45° geneigt.

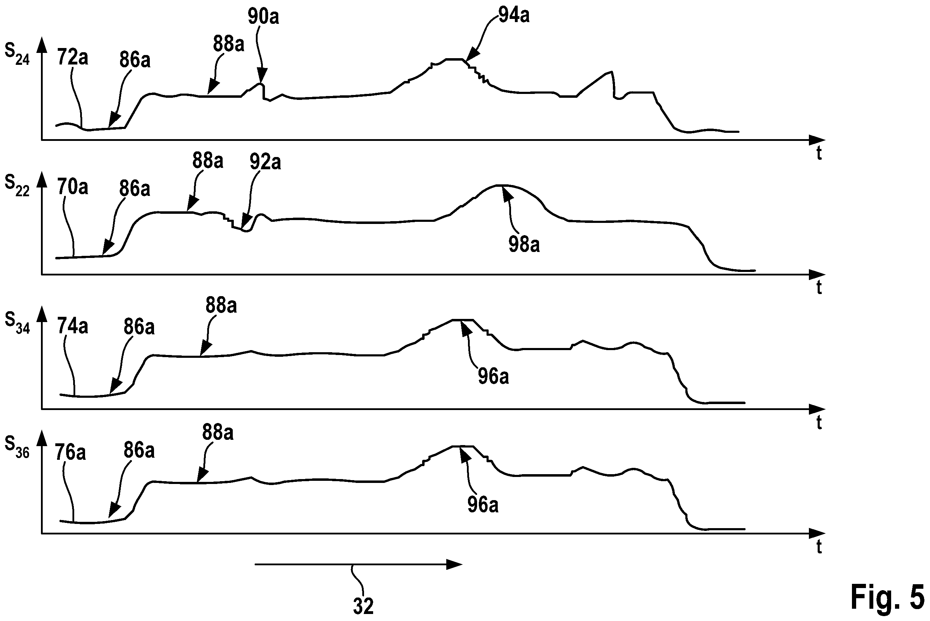

Zur Erzeugung des Untersuchungssignals 18 weist die Ortungseinheit 12 eine Signalerzeugungseinheit 68 auf, die ein Wechselsignal 52 generiert. Grundsätzlich ist es jedoch auch denkbar, dass das Untersuchungssignal 18 von einem Gleichsignal, wie beispielsweise von einem Signal in einem statischen elektrischen Feld, gebildet ist. Dieses Wechselsignal 52 wird auf die als Signalerzeugungselektrode ausgebildete Sensorelektrode 42a der Elektrodeneinheit 20a über eine nicht näher dargestellte Datenleitung übertragen und von dieser ausgegeben. Aufgrund einer symmetrischen Anordnung der zwei Paare von als Messelektroden ausgebildeten Sensorelektroden 22a, 24a, 34a, 36a um die als Signalerzeugungselektrode ausgebildete Sensorelektrode 42a liegt im Betrieb des Ortungsgeräts 10 bei einem Untersuchungsobjekt 14 mit einer homogenen Struktur und/oder einem homogenen Aufbau an jeder als Messelektrode ausgebildeten Sensorelektrode 22a, 24a, 34a, 36a ein im Wesentlichen gleiches Sensorsignal 70a, 72a, 74a, 76a an (Figur 5). Zudem ist durch die symmetrische Anordnung der zwei Paare von als Messelektroden ausgebildeten Sensorelektroden 22a, 24a, 34a, 36a zueinander für jede der als Messelektroden ausgebildeten Sensorelektroden 22a, 24a, 34a, 36a eine Beeinflussung bzw. eine Beeinträchtigung durch die jeweils drei weiteren als Messelektroden ausgebildeten Sensorelektroden 22a, 24a, 34a, 36a im Wesentlichen gleich groß. Veränderungen im Aufbau der Wand, die durch einen Gegenstand 16, wie beispielsweise einen Balken, eine Strom- oder Wasserleitung usw., hervorgerufen werden, können somit durch eine Änderung eines Parameters in zumindest einem der Sensorsignale 70a, 72a, 74a, 76a der als Messelektroden ausgebildeten Sensorelektroden 22a, 24a, 34a, 36a erkannt werden.

Hierzu werden die Sensorsignale 70a, 72a, 74a, 76a der vier als Messelektroden ausgebildeten Sensorelektroden 22a, 24a, 34a, 36a über eine Verstärkereinheit 78 zur Auswerteeinheit 48 geführt (Figur 4). Die Verstärkereinheit 78 weist für jede der als Messelektrode ausgebildeten Sensorelektrode 22a, 24a, 34a, 36a ein Verstärkerelement 80 auf. Die Auswerteeinheit 48 weist einen Analog-Digital-Wandler 82 auf, der die analogen Sensorsignale 70a, 72a, 74a, 76a in digitale Signale wandelt. Anschließend werden die Signale auf einen Mikrokontroller 84 weitergeleitet, in dem die verstärkten Signale weiterverarbeitet und ausgewertet werden (Figur 4). Anhand der ausgewerteten Signale kann in dem Mikrokontroller 84 eine Information über einen in der Wand befindlichen Gegenstand 16 ermittelt werden.

In Figur 5 sind die von den vier als Messelektroden ausgebildeten Sensorelektroden 22a, 24a, 34a, 36a gemessenen Sensorsignale 70a, 72a, 74a, 76a dargestellt. Hierbei ist ein Signalverlauf sᵢ über eine Zeit t dargestellt. Ist nach einem Einschalten des Ortungsgeräts 10 dieses zunächst noch zu weit von der Wand bzw. dem Untersuchungsobjekt 14 entfernt, ist zunächst ein Plateau 86a mit einer niedrigen Signalstärke in den vier Sensorsignalen 70a, 72a, 74a, 76a zu erkennen. Während eines Aufsetzens des Ortungsgeräts 10 auf der Oberfläche 54 durch den Bediener steigen die Sensorsignale 70a, 72a, 74a, 76a steil an, bis das Ortungsgerät 10 Kontakt mit der Wand hat. Weist die Wand eine homogene Struktur auf, ist dies durch einen im Wesentlichen einheitlichen, gleichen Signalpegel 88a in den vier Sensorsignalen 70a, 72a, 74a, 76a erkennbar. Aufgrund des einheitlichen, gleichen Signalpegels 88a in den vier Sensorsignalen 70a, 72a, 74a, 76a der vier als Messelektroden ausgebildeten Sensorelektroden 22a, 24a, 34a, 36a erfolgt in der Auswerteeinheit 48 eine selbsttätige Kalibrierung der Elektrodeneinheit 20a. Sofern die Wand bzw. das Untersuchungsobjekt 14 zumindest teilweise inhomogen ausgebildet ist, wird selbsttätig durch die Auswerteeinheit 48 ein nahezu einheitlicher Rauschpegel in den vier Sensorsignalen 70a, 72a, 74a, 76a ermittelt und hierdurch eine Anzeigeempfindlichkeit bzw. eine Anzeigeschwelle für eine nicht näher dargestellte Anzeigeeinheit des Ortungsgeräts 10 über dem Rauschsignal selbsttätig eingestellt.

Bei einem Verfahren des Ortungsgeräts 10 durch den Bediener können in den Sensorsignalen 70a, 72a, 74a, 76a der als Messelektroden ausgebildeten Sensorelektroden 22a, 24a, 34a, 36a unerwünschte Störungen als solche von der Auswerteeinheit 48 erkannt werden. Die Verfahrrichtung 32 ist in diesem Ausführungsbeispiel parallel zur ersten Symmetrieachse 26a von der ersten als Messelektrode ausgebildeten Sensorelektrode 22a in Richtung der zweiten als Messelektrode ausgebildeten Sensorelektrode 24a des ersten Paars von Messelektroden ausgerichtet. Eine Störung, wie beispielsweise ein Verkippen des Ortungsgeräts 10 um seine Längsachse 66 während eines Verfahrens auf der Wand, wirkt sich in den unterschiedlichen als Messelektroden ausgebildeten Sensorelektroden 22a, 24a, 34a, 36a unterschiedlich stark aus. Ein Abstand der zweiten als Messelektrode ausgebildeten Sensorelektrode 24a zur Oberfläche 54 wird durch das Verkippen des Ortungsgeräts 10 erheblich verkleinert, was sich durch einen sprunghaften Anstieg 90a im Signalverlauf s₂₄ bemerkbar macht. Ein Abstand der ersten als Messelektrode ausgebildeten Sensorelektroden 22a hingegen wird durch das Verkippen des Ortungsgeräts 10 erheblich vergrößert, was sich durch einen sprunghaften Abfall 92a im Signalverlauf s₂₂ bemerkbar macht. Ein Abstand der beiden als Messelektroden ausgebildeten Sensorelektroden 34a, 36a des zweiten Paars gegenüber der Oberfläche 54 bleibt vor, während und nach einem Verkippen des Ortungsgeräts 10 nahezu gleich, so dass im Wesentlichen die Sensorsignale 74a, 76a gleich bleiben.

Befindet sich entlang der Verfahrrichtung 32 ein im Wesentlichen senkrecht zur Verfahrrichtung 32 in der Wand angeordneter Gegenstand 16 unterhalb der Oberfläche 54 und gelangt in einen Detektionsbereich der Ortungseinheit 12, wird dies nacheinander in den vier als Messelektroden ausgebildeten Sensorelektroden 22a, 24a, 34a, 36a erfasst. Zunächst gelangt der Gegenstand in den Detektionsbereich der zweiten als Messelektrode ausgebildeten Sensorelektrode 22a und ist durch einen Signalausschlag 94a bzw. einen Signalpeak erkennbar. Entlang der Verfahrrichtung 32 gelangt der Gegenstand 16 danach in den Detektionsbereich des zweiten Paars der als Messelektroden ausgebildeten Sensorelektroden 34a, 36a, die den Gegenstand 16 im Wesentlichen gleichzeitig aufgrund der Anordnung der beiden als Messelektroden ausgebildeten Sensorelektroden 34a, 36a auf der zweiten Symmetrieachse 28a detektieren. Signalausschläge 96a in den beiden Sensorsignalen 74a, 76a erfolgen entlang der Zeit t nach dem Signalausschlag 94a des zweiten Sensorsignals 72a. Anschließend gelangt der Gegenstand in den Detektionsbereich der ersten als Messelektrode ausgebildeten Sensorelektrode 22a des ersten Paars und ist durch einen Signalausschlag 98a in dem Sensorsignal 70a erkennbar. Ein Abheben des Ortungsgeräts 10 von der Oberfläche 54 zeigt sich in den Sensorsignalen 70a, 72a, 74a, 76a der als Messelektroden ausgebildete Sensorelektroden 22a, 24a, 34a, 36a durch einen erheblichen Signalabfall 100a.

Durch diese Art der Anordnung und Verschaltung der einzelnen als Messelektroden ausgebildeten Sensorelektroden 22a, 24a, 34a, 36a kann ein für eine sachgemäße Benutzung des Ortungsgeräts 10 erforderlicher Wandkontakt des Ortungsgeräts 10 erfasst werden. Ferner kann über die Anzeigeneinheit dieser Wandkontakt dem Bediener des Ortungsgeräts 10 übermittelt werden bzw. kann dieser gegebenenfalls über die Anzeigeneinheit aufgefordert werden, das Ortungsgerät 10 mit der Wand zu kontaktieren. Zudem kann mittels der Auswerteeinheit 48 eine Richtungs- und/oder Bewegungsinformation aus den vier Sensorsignalen 70a, 72a, 74a, 76a gewonnen bzw. ermittelt werden.

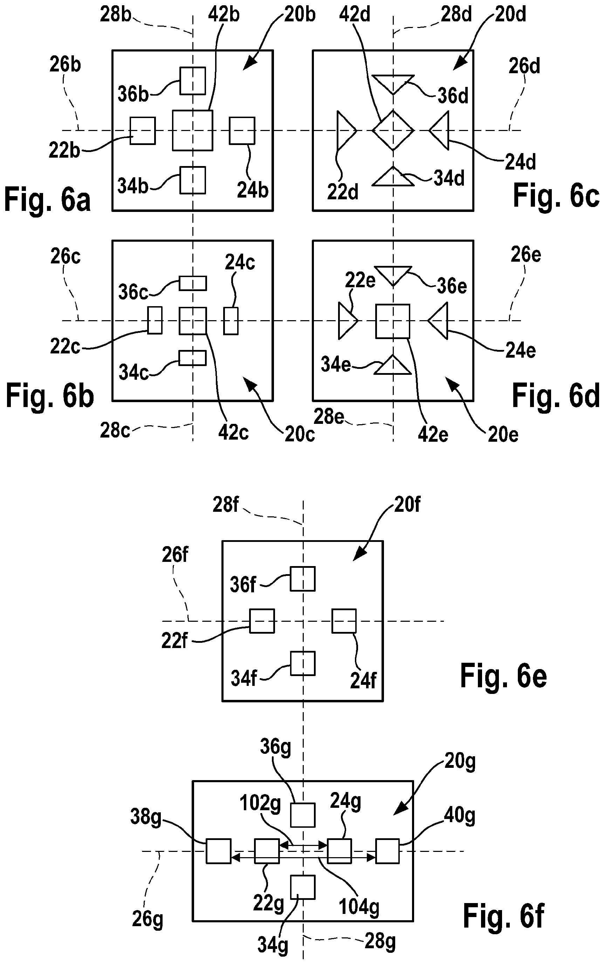

In den Figuren 6a bis 7d sind alternative Ausgestaltungen einer Elektrodeneinheit 20a dargestellt. Im Wesentlichen gleich bleibende Bauteile, Merkmale und Funktionen sind grundsätzlich mit den gleichen Bezugszeichen beziffert. Zur Unterscheidung der Ausführungsbeispiele sind jedoch den Bezugszeichen der Ausführungsbeispiele die Buchstaben a bis h hinzugefügt. Die nachfolgende Beschreibung beschränkt sich im Wesentlichen auf die Unterschiede zu dem Ausführungsbeispiel in Figur 3, wobei bezüglich gleich bleibender Bauteile, Merkmale und Funktionen auf die Beschreibung des Ausführungsbeispiels in Figur 3 verwiesen werden kann.

Die Figuren 6a bis 6d zeigen jeweils eine Elektrodeneinheit 20b-e für ein Ortungsgerät 10 nach den Figuren 1 und 2 mit jeweils vier als Messelektroden ausgebildeten Sensorelektroden 22b-e, 24b-e, 34b-e, 36b-e und einer als Signalerzeugungselektrode ausgebildete Sensorelektrode 42b-e. Zudem weist die Elektrodeneinheit 20b-e jeweils eine erste und eine zweite Symmetrieachse 26b-e, 28b-e auf, wobei die vier als Messelektroden ausgebildeten Sensorelektroden 22b-e, 24b-e, 34b-e, 36b-e symmetrisch bezüglich der zwei Symmetrieachsen 26b-e, 28b-e angeordnet sind. Die vier als Messelektroden ausgebildeten Sensorelektroden 22b-e, 24b-e, 34b-e, 36b-e und die eine als Signalerzeugungselektrode ausgebildete Sensorelektrode 42b-e unterscheiden sich von dem Ausführungsbeispiel in Figur 3 durch eine Größe und/oder eine Form der als Signalerzeugungselektrode ausgebildeten Sensorelektrode 42b-e und/oder der als Messelektroden ausgebildeten Sensorelektroden 22b-e, 24b-e, 34b-e, 36b-e.

Figur 6e zeigt eine Elektrodeneinheit 20f für ein Ortungsgerät 10 nach den Figuren 1 und 2 mit vier als Messelektroden ausgebildeten Sensorelektroden 22f, 24f, 34f, 36f. Zudem weist die Elektrodeneinheit 20f eine erste und eine zweite Symmetrieachse 26f, 28f auf, wobei die Sensorelektroden 22f, 24f, 34f, 36f und die beiden Symmetrieachsen 26f, 28f analog zu der Beschreibung zu Figur 3 innerhalb der Elektrodeneinheit 20f angeordnet sind. Die Sensorelektroden 22f, 24f, 34f, 36f sind mit einer Doppelfunktion belegt und sind neben einem Messen eines Untersuchungssignals zu einem Anlegen eines Wechselsignals in Form eines Wechselfelds vorgesehen. Grundsätzlich kann auch das Messsignal von einem Gleichsignal gebildet sein. Hierbei wird jeweils zwischen einem Paar Sensorelektroden 22f, 24f, 34f, 36f, das entlang einer der Symmetrieachsen 26f, 28f angeordnet ist, ein Wechselfeld angelegt, und das weitere Paar von Sensorelektroden 22f, 24f, 34f, 36f ist zu einem Messen des Untersuchungssignals vorgesehen.

Figur 6f zeigt eine Elektrodeneinheit 20g für ein Ortungsgerät 10 nach den Figuren 1 und 2 mit sechs als Messelektroden ausgebildeten Sensorelektroden 22g, 24g, 34g, 36g, 38g, 40g. Zudem weist die Elektrodeneinheit 20g eine erste und eine zweite Symmetrieachse 26g, 28g auf, wobei die beiden Symmetrieachsen 26g, 28g analog zu der Beschreibung zu Figur 3 innerhalb der Elektrodeneinheit 20g angeordnet sind. Zwei Paare von Sensorelektroden 22g, 24g, 38g, 40g sind hierbei in Reihe auf der ersten Symmetrieachse 26g und zudem symmetrisch bezüglich der zweiten Symmetrieachse 28g angeordnet, wobei hierbei das erste Paar von Sensorelektroden 22g, 24g einen kleineren Abstand 102g zueinander aufweist als ein Abstand 104g des zweiten Paars von Sensorelektroden 38g, 40g. Eine Funktionsweise der Sensorelektroden 22g, 24g, 34g, 36g, 38g, 40g entspricht hierbei einer Funktionsweise der Sensorelektroden 22f, 24f, 34f, 36f analog dem Ausführungsbeispiel 6e. Zudem kann je nach Auswahl des Paars von Sensorelektroden 22g, 24g, 38g, 40g entlang der ersten Symmetrieachse 26g aufgrund des unterschiedlichen Abstands der Sensorelektroden 22g, 24g, 38g, 40g zueinander ein sich in das Untersuchungsobjekt 14 bzw. in die Wand hineinerstreckender Detektionsbereich bzw. ein Detektionsradius 50g variiert werden und damit auch ein Abstand des Gegenstands 16 zu einer Oberfläche 54 bestimmt werden und/oder auch tief in der Wand angeordnete Gegenstände 16 erfasst werden.

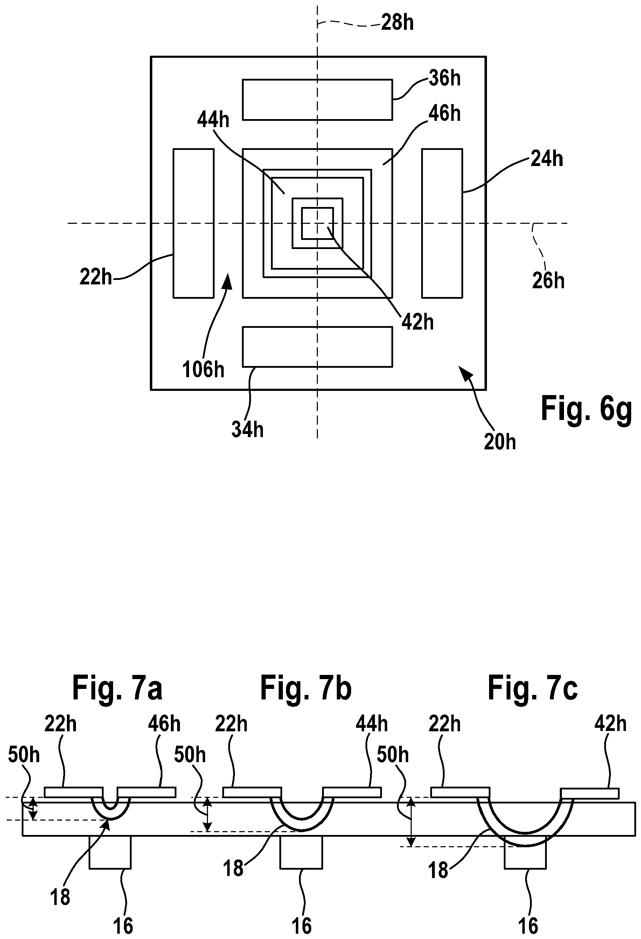

Figur 6g zeigt eine Elektrodeneinheit 20h für ein Ortungsgerät 10 nach den Figuren 1 und 2 mit vier als Messelektroden ausgebildeten Sensorelektroden 22h, 24h, 34h, 36h und drei, von jeweils einer Signalerzeugungselektrode gebildeten Sensorelektrode 42h, 44h, 46h. Zudem weist die Elektrodeneinheit 20h eine erste und eine zweite Symmetrieachse 26h, 28h auf, wobei die vier als Messelektroden ausgebildeten Sensorelektroden 22h, 24h, 34h, 36h symmetrisch bezüglich der zwei Symmetrieachsen 26h, 28h angeordnet sind. Die drei als Signalerzeugungselektroden ausgebildeten Sensorelektroden 42h, 44h, 46h sind in einem von den vier als Messelektroden ausgebildeten Sensorelektroden 22h, 24h, 34h, 36h umgebenen Bereich 106h angeordnet. Zudem ist die erste als Signalerzeugungselektrode ausgebildete Sensorelektrode 42h in einer Mitte 62h des Bereichs 106h angeordnet und von den beiden weiteren Signalerzeugungselektroden umgeben, wobei die zweite als Signalerzeugungselektrode ausgebildete Sensorelektrode 44h zwischen der ersten und der dritten als Signalerzeugungselektrode ausgebildeten Sensorelektrode 42h, 46h angeordnet ist. Zudem sind die drei als Signalerzeugungselektroden ausgebildeten Sensorelektroden 42h, 44h, 46h jeweils symmetrisch bezüglich der beiden Symmetrieachsen 26h, 28h und der vier als Messelektroden ausgebildeten Sensorelektroden 22h, 24h, 34h, 36h angeordnet. Mittels der Auswerteeinheit 48 können die als Signalerzeugungselektroden ausgebildeten Sensorelektroden 42h, 44h, 46h und die als Messelektroden ausgebildeten Sensorelektroden 22h, 24h, 34h, 36h derart miteinander verschaltet werden, dass ein Detektionsradius 50h eines Untersuchungssignals 18h variiert werden kann, wie dies in den Figuren 7a bis 7b dargestellt ist.

In einer alternativen nicht dargestellten Ausgestaltung können die einzelnen Sensorelektroden und/oder einzelne Sensorelektrodenpaare der Elektrodeneinheit an beliebigen Positionen innerhalb des Ortungsgeräts angeordnet sein unter einer Beibehaltung einer symmetrischen Anordnung bezüglich zumindest einer oder mehrerer Symmetrieachsen. Die Sensorelektroden können hierbei beispielsweise entlang einer Längsachse und/oder quer zur Längsachse an gegenüberliegend angeordneten Endbereichen des Ortungsgeräts angeordnet sein.

## Patentansprüche

1. Ortungsgerät, insbesondere handgeführtes Ortungsgerät, mit einer Ortungseinheit (12), die zu einer Erfassung eines Vorhandenseins eines in einem Untersuchungsobjekt (14) angeordneten Gegenstands (16) mittels eines Untersuchungssignals (18) vorgesehen ist, wobei die Ortungseinheit (12) eine Elektrodeneinheit (20a-h) mit zumindest zwei Paaren von Sensorelektroden (22a-e, 24a-e, 34a-e, 36a-e; 22h, 24h, 34h, 36h), die als Messelektroden ausgebildet sind, aufweist, die dazu vorgesehen sind, zwei unterschiedliche Sensorsignale zu liefern, und mit zumindest einer Sensorelektrode (42a-e; 42h, 44h, 46h), die als Signalerzeugungselektrode ausgebildet ist, wobei die Sensorelektroden (22a-e, 24a-e, 34a-e, 36a-e; 42a-e; 22h, 24h, 34h, 36h, 42h, 44h, 46h) kreuzförmig angeordnet sind.

2. Ortungsgerät nach Anspruch 1, **dadurch gekennzeichnet, dass** die Elektrodeneinheit (20a-e; 20h) zumindest eine erste Symmetrieachse (26a-e; 26h) aufweist, wobei zwei als Messelektroden ausgebildete Sensorelektroden (22a-e, 24a-e, 34a-e, 36a-e; 22h, 24h, 34h, 36h) eines Paares bezüglich der ersten Symmetrieachse (26a-e; 26h) im Wesentlichen symmetrisch zueinander angeordnet sind.

3. Ortungsgerät nach Anspruch 2, **dadurch gekennzeichnet, dass** die Elektrodeneinheit (20a-e; 20h) zumindest eine zweite Symmetrieachse (28a-e; 28h) aufweist, wobei zwei als Messelektroden ausgebildete Sensorelektroden (22a-e, 24a-e, 34a-e, 36a-e; 22h, 24h, 34h, 36h) eines Paares bezüglich der beiden Symmetrieachsen (26a-e; 26h, 28a-e; 28h) im Wesentlichen symmetrisch zueinander angeordnet sind.

4. Ortungsgerät nach Anspruch 3, **dadurch gekennzeichnet, dass** die zweite Symmetrieachse (28a-e; 28h) im Wesentlichen senkrecht bezüglich der ersten Symmetrieachse (26a-e; 26h) angeordnet ist.

5. Ortungsgerät nach Anspruch 3, **gekennzeichnet durch** eine Führungseinheit (30) mit einer Verfahrrichtung (32), die im Wesentlichen parallel zu einer der beiden Symmetrieachsen (26a-e; 26h) ausgerichtet ist.

6. Ortungsgerät nach einem der vorhergehenden Anspruche, **dadurch gekennzeichnet, dass** zumindest zwei als Messelektroden ausgebildete Sensorelektroden (22a-e, 24a-e, 34a-e, 36a-e; 22h, 24h, 34h, 36h) eines Paares zueinander beabstandet angeordnet sind.

7. Ortungsgerät nach einem der Ansprüche 2-5 **dadurch gekennzeichnet, dass** zumindest eine Sensorelektrode (22a-e, 24a-e, 34a-e, 36a-e; 22h, 24h, 34h, 36h) auf der zumindest einen Symmetrieachse (26a-e; 26h, 28a-e; 28h) angeordnet ist.

8. Ortungsgerät nach einem der vorhergehenden Ansprüche, **dadurch gekennzeichnet, dass** zumindest eine der Sensorelektroden (22a-e, 24a-e, 34a-e, 36a-e; 22h, 24h, 34h, 36h) von einer Kapazitivelektrode gebildet ist.

9. Ortungsgerät nach einem der vorhergehenden Ansprüche, **dadurch gekennzeichnet, dass** die beiden Paare von als Messelektroden ausgebildeten Sensorelektroden (22a-e, 24a-e, 34a-e, 36a-e; 22h, 24h, 34h, 36h) gekreuzt zueinander, das heißt um 90° zueinander gedreht angeordnet sind.

10. Ortungsgerät zumindest nach Anspruch 3, **dadurch gekennzeichnet, dass** die Ortungseinheit (12) eine Auswerteeinheit (48) aufweist, die dazu vorgesehen ist, Daten der zumindest zwei im Wesentlichen symmetrisch bezüglich zumindest einer der beiden Symmetrieachsen (26a-e; 26h, 28a-e; 28h) zueinander angeordneten Sensorelektroden (22a-e, 24a-e, 34a-e, 36a-e; 22h, 24h, 34h, 36h, 38h, 40h) zusammen auszuwerten.

11. Ortungsgerät nach Anspruch 10, **dadurch gekennzeichnet, dass** die Auswerteeinheit (48) dazu vorgesehen ist, einen Detektionsradius (50h) zumindest eines von einer der Sensorelektroden (22h, 24h, 34h, 36h) empfangenen Untersuchungssignals (18) zu variieren.

12. Ortungsgerät nach einem der vorhergehenden Ansprüche, **dadurch gekennzeichnet, dass** die Ortungseinheit (12) dazu vorgesehen ist, zumindest ein elektrisches Wechselsignal (52) zu erzeugen.

## Claims

1. Location device, in particular a hand-held location device, having a location unit (12) which is provided to detect the presence of an article (16) arranged in a test object (14) by means of a test signal (18), wherein the location unit (12) has an electrode unit (20a-h) having at least two pairs of sensor electrodes (22a-e, 24a-e, 34a-e, 36a-e; 22h, 24h, 34h, 36h) which are formed as measuring electrodes which are provided to supply two different sensor signals, and having at least one sensor electrode (42a-e; 42h, 44h, 46h) which is formed as a signal-generating electrode, wherein the sensor electrodes (22a-e, 24a-e, 34a-e, 36a-e; 42a-e; 22h, 24h, 34h, 36h, 42h, 44h, 46h) are arranged in the form of a cross.

2. Location device according to Claim 1, **characterized in that** the electrode unit (20a-e; 20h) has at least one first axis of symmetry (26a-e; 26h), wherein two sensor electrodes (22a-e, 24a-e, 34a-e, 36a-e; 22h, 24h, 34h, 36h) formed as measuring electrodes of a pair are arranged substantially symmetrically relative to each other with respect to the first axis of symmetry (26a-e; 26h).

3. Location device according to Claim 2, **characterized in that** the electrode unit (20a-e; 20h) has at least one second axis of symmetry (28a-e; 28h), wherein two sensor electrodes (22a-e, 24a-e, 34a-e, 36a-e; 22h, 24h, 34h, 36h) formed as measuring electrodes of a pair are arranged substantially symmetrically relative to each other with respect to the two axes of symmetry (26a-e; 26h, 28a-e; 28h).

4. Location device according to Claim 3, **characterized in that** the second axis of symmetry (28a-e; 28h) is arranged substantially at right angles relative to the first axis of symmetry (26a-e; 26h).

5. Location device according to Claim 3, **characterized by** a guide unit (30) having a direction of travel (32) which is aligned substantially parallel to one of the two axes of symmetry (26a-e; 26h).

6. Location device according to one of the preceding claims, **characterized in that** at least two sensor electrodes (22a-e, 24a-e, 34a-e, 36a-e; 22h, 24h, 34h, 36h formed as measuring electrodes of a pair are arranged at a distance from each other.

7. Location device according to one of Claims 2 - 5, **characterized in that** at least one sensor electrode (22a-e, 24a-e, 34a-e, 36a-e; 22h, 24h, 34h, 36h) is arranged on the at least one axis of symmetry (26a-e; 26h, 28a-e; 28h).

8. Location device according to one of the preceding claims, **characterized in that** at least one of the sensor electrodes (22a-e, 24a-e, 34a-e, 36a-e; 22h, 24h, 34h, 36h) is formed by a capacitive electrode.

9. Location device according to one of the preceding claims, **characterized in that** the two pairs of sensor electrodes (22a-e, 24a-e, 34a-e, 36a-e; 22h, 24h, 34h, 36h) formed as measuring electrodes are arranged so as to be crossed relative to each other, which means rotated through 90° relative to each other.

10. Location device at least according to Claim 3, **characterized in that** the location unit (12) has an evaluation unit (48), which is provided to evaluate data from the at least two sensor electrodes (22a-e, 24a-e, 34a-e, 36a-e; 22h, 24h, 34h, 36h 38h, 48h) arranged substantially symmetrically relative to each other with respect to at least one of the two axes of symmetry (26a-e; 26h, 28a-e; 28h) together.

11. Location device according to Claim 10, **characterized in that** the evaluation unit (48) is provided to vary a detection radius (50h) of at least one test signal (18) received from one of the sensor electrodes (22h, 24h, 34h, 36h).

12. Location device according to one of the preceding claims, **characterized in that** the location unit (12) is provided to generate at least one alternating electric signal (52).

## Revendications

1. Appareil de localisation, notamment appareil de localisation portatif, comprenant une unité de localisation (12) qui est conçue pour une détection d'une présence d'un objet (16) disposé dans une entité analysée (14) au moyen d'un signal d'analyse (18), l'unité de localisation (12) possédant une unité à électrode (20a-h) comportant au moins deux paires d'électrodes de détection (22a-e, 24a-e, 34a-e, 36a-e ; 22h, 24h, 34h, 36h), lesquelles sont réalisées sous la forme d'électrodes de mesure et sont conçues pour délivrer deux signaux de détection différents, et comportant au moins une électrode de détection (42a-e ; 42h, 44h, 46h), laquelle est réalisée sous la forme d'une électrode de génération de signal, les électrodes de détection (22a-e, 24a-e, 34a-e, 36a-e, 42a-e ; 22h, 24h, 34h, 36h, 42h, 44h, 46h) étant disposées en forme de croix.

2. Appareil de localisation selon la revendication 1, **caractérisé en ce que** l'unité à électrode (20a-e ; 20h) possède au moins un premier axe de symétrie (26a-e ; 26h), deux électrodes de détection (22a-e, 24a-e, 34a-e, 36a-e ; 22h, 24h, 34h, 36h) d'une paire, réalisées sous la forme d'électrodes de mesure, étant disposées de manière sensiblement symétrique l'une par rapport à l'autre en référence au premier axe de symétrie (26a-e ; 26h).

3. Appareil de localisation selon la revendication 2, **caractérisé en ce que** l'unité à électrode (20a-e ; 20h) possède au moins un deuxième axe de symétrie (28a-e ; 28h), deux électrodes de détection (22a-e, 24a-e, 34a-e, 36a-e ; 22h, 24h, 34h, 36h) d'une paire, réalisées sous la forme d'électrodes de mesure, étant disposées de manière sensiblement symétrique l'une par rapport à l'autre en référence aux deux axes de symétrie (26a-e ; 26h, 28a-e ; 28h).

4. Appareil de localisation selon la revendication 3, **caractérisé en ce que** le deuxième axe de symétrie (28a-e ; 28h) est disposé sensiblement perpendiculairement au premier axe de symétrie (26a-e ; 26h).

5. Appareil de localisation selon la revendication 3, **caractérisé par** une unité de guidage (30) ayant un sens de déplacement (32) qui est orienté sensiblement parallèlement à l'un des deux axes de symétrie (26a-e ; 26h).

6. Appareil de localisation selon l'une des revendications précédentes, **caractérisé en ce qu'**au moins deux électrodes de détection (22a-e, 24a-e, 34a-e, 36a-e ; 22h, 24h, 34h, 36h) d'une paire, réalisées sous la forme d'électrodes de mesure, sont disposées espacées l'une de l'autre.

7. Appareil de localisation selon l'une des revendications 2 à 5, **caractérisé en ce qu'**au moins une électrode de détection (22a-e, 24a-e, 34a-e, 36a-e ; 22h, 24h, 34h, 36h) est disposée sur l'au moins un axe de symétrie (26a-e ; 26h, 28a-e ; 28h).

8. Appareil de localisation selon l'une des revendications précédentes, **caractérisé en ce qu'**au moins une des électrodes de détection (22a-e, 24a-e, 34a-e, 36a-e ; 22h, 24h, 34h, 36h) est formée par une électrode capacitive.

9. Appareil de localisation selon l'une des revendications précédentes, **caractérisé en ce que** les deux paires d'électrodes de détection (22a-e, 24a-e, 34a-e, 36a-e ; 22h, 24h, 34h, 36h) réalisées sous la forme d'électrodes de mesure sont disposées croisées l'une par rapport à l'autre, c'est-à-dire tournées de 90° l'une par rapport à l'autre.

10. Appareil de localisation selon au moins la revendication 3, **caractérisé en ce que** l'unité de localisation (12) possède une unité d'interprétation (48) qui est conçue pour interpréter ensemble des données des au moins deux électrodes de détection (22a-e, 24a-e, 34a-e, 36a-e ; 22h, 24h, 34h, 36h) disposées de manière sensiblement symétrique l'une par rapport à l'autre en référence à au moins l'un des deux axes de symétrie (26a-e ; 26h, 28a-e ; 28h).

11. Appareil de localisation selon la revendication 10, **caractérisé en ce que** l'unité d'interprétation (48) est conçue pour faire varier un rayon de détection (50h) d'au moins un signal d'analyse (18) reçu par l'une des électrodes de détection (22h, 24h, 34h, 36h).

12. Appareil de localisation selon l'une des revendications précédentes, caractérisé en ce l'unité de localisation (12) est conçue pour générer au moins un signal électrique alternatif (52).
